**Europäisches Patentamt**

**European Patent Office**

**Office européen des brevets**

(11) Publication number: **0 087 943**

**B1**

(12) **EUROPEAN PATENT SPECIFICATION**

(45) Date of publication of patent specification: **10.06.87**

(51) Int. Cl.⁴: **G 06 F 3/03**

(21) Application number: **83300998.8**

(22) Date of filing: **25.02.83**

(54) Method and apparatus for setting coordinate system origin.

(30) Priority: **27.02.82 JP 31494/82**

(43) Date of publication of application:
**07.09.83 Bulletin 83/36**

(45) Publication of the grant of the patent:
**10.06.87 Bulletin 87/24**

(84) Designated Contracting States:
**CH DE FR GB LI**

(56) References cited:
**US-A-4 042 866**

**IBM TECHNICAL DISCLOSURE BULLETIN, vol.
18, no. 5, October 1975, pages 1589-1592, New
York, US. P. L. GARDNER et al.: "Paper menus
and keyboards for digitizing tablets"**

**IBM TECHNICAL DISCLOSURE BULLETIN, vol.
19, no. 4, September 1976, page 1436, New
York, US. M. W. CARMICHAEL: "Planar linkage"**

(73) Proprietor: **FANUC LTD
3580, Shibokusa Aza-Komanba Oshino-mura
Minamitsuru-gun Yamanashi 401-05 (JP)**

(72) Inventor: **Kishi, Hajimu
Hinohirayamadai-Jutaku 1104 6-7-8, Asahigaoka
Hino-shi Tokyo (JP)**
Inventor: **Seki, Masaki
3-15-2-406, Takaidonishi
Suginami-ku Tokyo (JP)**
Inventor: **Tanaka, Kunio
Nishihachioji-Haitsu C-7-9, 711 Sandahigashi-
cho
Hachioji-shi Tokyo (JP)**

(74) Representative: **Billington, Lawrence Emlyn
et al
HASELTINE LAKE & CO., Hazlitt House
28 Southampton Buildings
Chancery Lane
London WC2A 1AT (GB)**

Courier Press, Leamington Spa, England.

**0 087 943**

(58) References cited:

**NEW HORIZONS FOR MANUFACTURING PROCEEDINGS OF THE NUMERICAL CONTROL SOCIETY OF THE 16th ANNUAL MEETING AND TECHNICAL CONFERENCE HOLD ON MARCH 25-28, 1979, pages 56-71, Marrit hotel, Los Angeles, California, US, N.C.S. 1979 Spring Lake (US). D. C. BERAN: "Numerical control programming via computer graphics"**

## Description

The present invention relates to a method of and apparatus for preparing an NC tape for a numerically controlled machine tool.

A numerically controlled machine tool (hereafter referred to as an NC machine tool) is operated in a manner specified by a machining program stored on an NC tape to subject a workpiece to prescribed machining. To create an NC tape for a cutting operation, numerical control information and other machining conditions are punched into a paper tape in accordance with predetermined rules. The numerical control information includes all the data necessary for machining, such as numerical values obtained from a design drawing and relating to the dimensions of the workpiece that is to be machined, feed speed, and the like. When machining the workpiece by means of an NC machine tool, the NC tape which has been prepared is fed into the tape reader of a numerical control device so that the various instructions recorded on the NC tape may be read successively, the numerical control device responding by executing the read instructions to cause the machine tool to machine the workpiece as prescribed. Since considerable time and experience is required to create the information stored on an NC tape, an apparatus for preparing an NC tape automatically has recently been developed and put into use. The apparatus includes a graphic display, keyboard and printer and is extremely useful in preparing NC tapes in a simple, accurate and rapid manner. Consisting of a microcomputer, the apparatus for automatic preparation of an NC tape has an internal main memory for storing the NC tape preparation software, or system program.

To create a machining program by means of the above-described apparatus, the prescribed system is loaded into the main memory, and a so-called "part program" consisting of a group of data specifying the contour of a part, namely the path of a tool for cutting the contour, must be created and entered in accordance with predetermined rules. The preparation of such a part program is troublesome and time-consuming, and can only be accomplished by a programmer having considerable programming skill. With these difficulties in view, there has been demand for a system capable of entering graphics simply by specifying a plurality of points on such graphics, and attention has turned to a graphic input apparatus employing a tablet.

Such a graphic input device using a tablet can easily enter graphics even if the dimensions thereof are unknown. It has been troublesome, however, to enter the origin of the NC data. No origin of an NC data coordinate system can be set and entered particularly when a drawing is greater in size than the readout area of a tablet with the origin of the NC data coordinate system being located outside the read-out area.

The article "Paper menus and keyboards for digitizing tablets" in IBM TDB, Vol. 18, No. 5, October 1975, pages 1589—1592, discloses a method and apparatus in which graphics may be entered via a tablet by specifying a plurality of points on the graphics. The points are entered in terms of the coordinate system of the tablet and are transformed into terms of the coordinate system of the drawing (i.e. the NC data coordinate system). The origin of the NC data coordinate system lies inside the read-out area of the tablet.

US—A—4 042 866 discloses a method of preparing an NC tape in which a drawing is laid on a large input table and an index can be moved in the x and y directions across the table for use in entering into a processor coordinates of points on the drawing. The origin of the drawing (i.e. the NC data coordinate system) again lies inside the area of the input table.

According to one aspect of the invention there is provided a method of preparing an NC tape for a numerically controlled machine tool, wherein information concerning a figure on a drawing and required for preparing the NC tape is entered when the drawing is laid on the read-out area of an input plane, the figure being entered by designating a plurality of points on the drawing with a coordinate designating device, the method being characterized in that:

the origin of the coordinate system of the drawing is outside the read-out area of the input plane, which is a tablet, and is set and entered by a method comprising the steps of:

designating a first point on the drawing with the coordinate designating device to enter the coordinates $(x_t, y_t)$ of said first point with respect to the tablet coordinating system;

entering the coordinates $(X_t, Y_t)$ of said first point in a numerical control data coordinate system through an input device, the coordinate axes of the two coordinate systems being parallel; and

setting the origin of the numerical control data coordinate system by subtracting the coordinates $(x_t, y_t)$ from the coordinates $(X_t, Y_t)$;

the method further comprising designating an arbitrary second point on the drawing thereby to enter the coordinates $(X_q, y_q)$ of said second point in the tablet coordinate system, and setting the coordinates $(x_m, y_m)$ of said second point in the numerical control data coordinate system by performing the following arithmetic operations:

$$x_m = x_q + (X_t - x_t)$$

$$y_m = y_q + (Y_t - y_t).$$

According to another aspect of the invention there is provided an apparatus for preparing an NC tape for a numerically controlled machine tool, wherein information concerning a figure on a drawing and required for preparing the NC tape can be entered, the apparatus comprising:

an input plane having a read-out area for placing the drawing thereon; and

coordinate designating means for designating a plurality of points on the figure to enter coordinates thereof;

the apparatus being characterised in that the input plane is a tablet for receiving a drawing with its origin outside said read-out area, and the apparatus comprises:

a first register for storing the coordinates $(x_t, y_t)$ of a first point on the figure in a tablet coordinate system;

a second register for storing the coordinates $(X_t, Y_t)$ of said first point in a numerical control data coordinate system, and

a third register for storing the coordinates $(x_q, y_q)$ of a second point in the tablet coordinate system, which coordinates are entered by means of said tablet; and

coordinate transformation means for performing the following arithmetic operations to obtain coordinates $(x_m, y_m)$ of said second point in the numerical control data coordinate system:

$$x_m = x_q + (X_t - x_t)$$

$$y_m = y_q + (Y_t - y_t)$$

An example of the present invention may provide a novel method and apparatus capable of easily setting and entering the origin of an NC data coordinate system.

An example of the present invention may provide a novel method and apparatus capable of easily setting the origin of an NC data coordinate system even when no dimensions are known, and of setting and entering the origin of an NC data coordinate system even in a case where the origin is located outside the read-out area of a tablet.

In one embodiment of the invention a figure on a drawing placed on the read-out area of a tablet is entered through a coordinate designating device by designating a plurality of points on the drawing, and at the same time the origin of the drawing coordinate system is set and entered.

Features and advantages of examples of the present invention will be apparent from the following description taken in conjunction with the accompanying drawings, in which like reference characters designate the same or similar parts throughout the figures thereof.

Brief description of the drawings

Fig. 1 is a diagram illustrative of principles of the present invention;

Fig. 2 is a block diagram of a system for reducing the present invention to practice;

Fig. 3 is a perspective view of the general features of a system for creating NC data;

Fig. 4 is a perspective view of a tablet input device in the system shown in Fig. 3; and

Fig. 5 is an enlarged, top view of a cursor unit included in the device of Fig. 4.

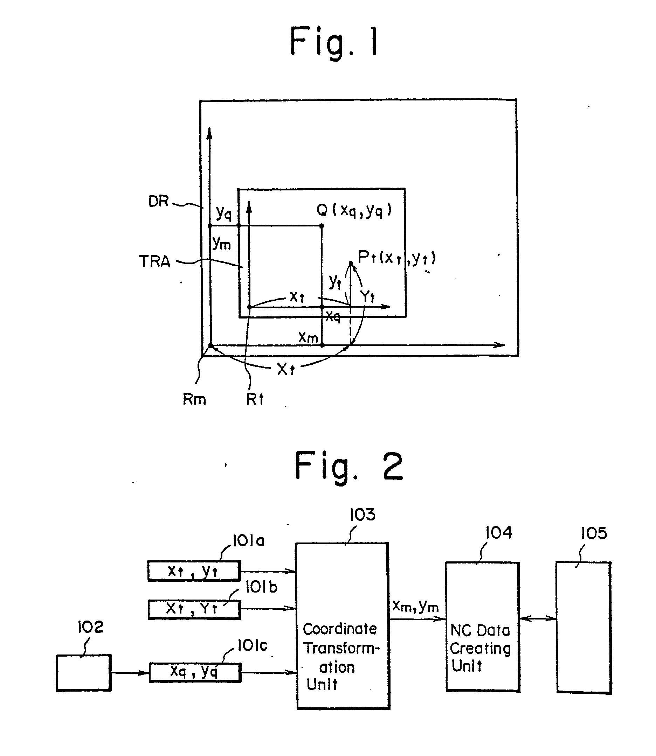

Reference will first be had to Fig. 1 to describe the basis of the present invention.

The origin $R_m$, also known as the reference point, of an NC data coordinate system on a drawing DR is set in the following fashion:

(a) A point $P_t$ on a tablet read-out area TRA and on a drawing DR is designated by a coordinate designating device, and the coordinates $(x_t, y_t)$

thereof on the tablet coordinate system are entered;

(b) The coordinates $(X_t, Y_t)$ of the designated point $P_t$ in an NC data coordinate system are entered from a keyboard.

After setting the coordinate system by the foregoing steps (a) and (b), any point Q on the drawing is designated, the coordinates $(x_q, y_q)$ thereof in the tablet coordinate system are entered, and the following arithmetic operations are performed:

$$x_m = x_q + (X_t - x_t) \qquad (1)$$

$$y_m = y_q + (Y_t - y_t) \qquad (2)$$

This provides the coordinates $(x_m, y_m)$ of the point Q in the NC data coordinate system. It should be noted that the tablet coordinate system and NC data coordinate system are assumed to lie parallel to each other.

Fig. 2 is a block diagram of a system for reducing the present invention to practice.

The apparatus includes a first register 101a for storing the coordinates $(x_t, y_t)$ of the point $P_t$ in the tablet coordinate system, and a second register for storing the coordinates $(X_t, Y_t)$ of the point $P_t$ in the NC data coordinate system. When the coordinates $(x_q, y_q)$ of the point Q (Fig. 1) in the tablet coordinate system are fed from the tablet 102 into a third register 101c, a coordinate transformation unit 103 performs the arithmetic operations of Eqs. (1) and (2) to generate the coordinate values $x_m, y_m$ in the NC data coordinate system. An NC data creation unit 104 employs the coordinate values $x_m, y_m$ to generate NC data which are then stored in a data memory 105.

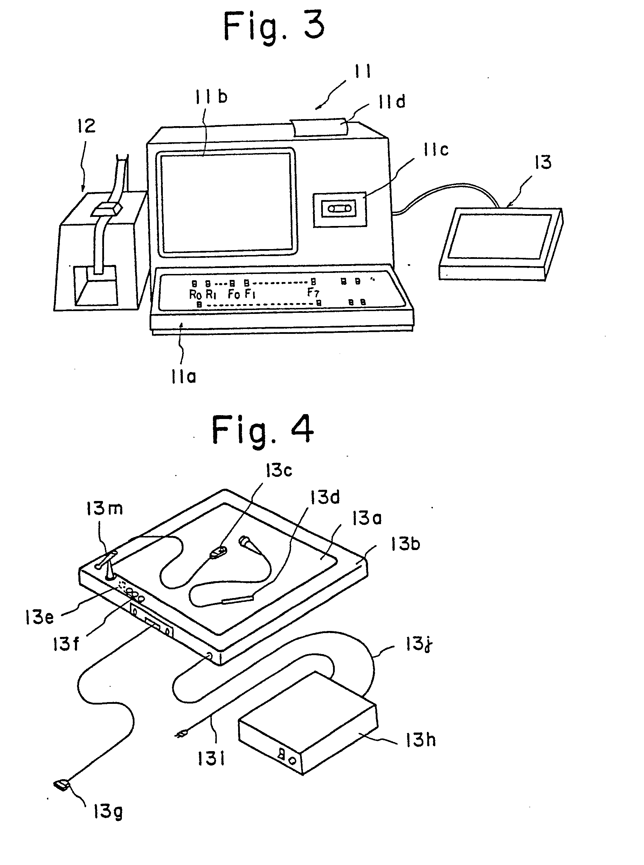

Fig. 3 is a perspective view of a system for creating NC data in which a method of setting the origin of a coordinate system of the present invention can be incorporated. The system includes the main body 11 of an apparatus for creating NC data. The main body 11 comprises a key board 11a having a multiplicity of keys, a graphic display device 11b, a magnetic tape unit 11c for loading a magnetic tape cassette, a printer 11d, and a control unit, not shown. The latter is constituted by a microcomputer which executes processing for the input and output of information, for digitizing and for the creation of NC data, all executed by means of a tablet described hereinbelow, based on a system program stored previously in memory means such as a ROM (read-only memory). The multiplicity of keys provided on the keyboard 11a are for responding to prompts which appear on the system CRT, for designating system program loading, and for entering NC data. The graphic display device 11b displays, in graphical form, coordinate values obtained by digitization of positions designated by the tablet, as well as input data, numerical values, NC data and various messages or prompts for conversational interaction with the operator. The magnetic tape unit 11c is used to enter a system program into the main body of the NC data creating apparatus 11. By way of example, when using a tablet to enter coordinate values directly from a drawing and prepare NC data, the software (system program) for digitizing processing must be fed into the main body 11. This is done by selecting the magnetic tape cassette containing the digitizing program, and loading the cassette into the magnetic tape unit 11c. To read the tape into the system, the operator need only touch a load button on the keyboard 11a after the cassette has been set in the tape unit 11c. The printer 11d is adapted to print out characters which appear on the screen of the graphic display device 11b, data punched in a paper tape, described later, and information which has been written into the loaded magnetic tape.

The system also includes a paper tape reader/puncher 12 for preparing an NC tape by punching a paper tape with perforations indicative of the NC data prepared by main body 11, and for reading NC or other data which has already been punched into an NC tape. The system tablet, designated at 13, comprises a board which uses the principle of electromagnetic induction to enter data. by relying upon a coordinate designating device such as a cursor unit or stylus pen as means for designating coordinates, the tablet 13 is operable to input positional coordinates from a drawing laid on the tablet surface, these coordinates being fed into the main body 11 as an input thereto. It should be noted that the tablet 13 corresponds to the tablet 102 shown in Fig. 2.

The perspective view of Fig. 4 shows the external appearance of the tablet 13 in greater detail. The tablet 13 comprises a tablet main body or board 13a, a tablet cover 13b, a cursor unit 13c serving as the coordinate designating device, a stylus pen 13d, a busser 13e, a group of lamps 13f indicating, e.g., coordinate input mode and introduction of power, an input/output connector for connecting the tablet 13 to the main body 11, a power unit 13h for supplying the table body 13a with D.C. power, an A.C. cable 13i for connecting the power unit 13h to an A.C. source, a D.C. cable 13j for the connection between the tablet body and power unit, and a pen stand 13m for holding the stylus pen 13 when not in use. The cursor unit 13c or stylus pen 13d is used to enter coordinate and other data.

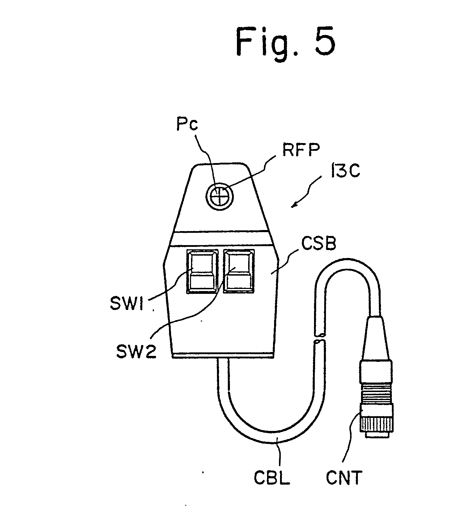

The details of the cursor unit 13c are illustrated in the enlarged view of Fig. 5, in which a top view of the cursor unit is shown. The cursor unit 13c has a main body CSB, first and second switches SW1, SW2, a position reader RFP having a crosshair arrangement, a connector CNT and a cable CBL leading from the connector CNT to the main body CSB. To enter the coordinates of a point, the intersection Pc of the cross hairs provided on the position reader RFP is aligned with the desired point on a drawing laid on the tablet body, followed by depressing the first switch SW1 or second switch SW2.

With the help of the present invention, the origin of an NC data coordinate system can easily be established, and can be set and entered even when the origin is located outside the read-out area of the tablet.

As many apparently widely different embodiments of the invention can be made without departing from the spirit and scope thereof, it is to be understood that the invention is not limited to the specific embodiments thereof except as defined in the appended claims.

Broadly speaking, a figure on a drawing DR placed on the read-out area TRA of a tablet is entered through a coordinate designating device by designating a plurality of points on the drawing, and at the same time the origin of the drawing coordinate system is set and entered. To carry out the setting and entry of the coordinate system origin, a first point Pt on the drawing is designated by the coordinate designating device to enter the coordinates of the first point Pt in a tablet coordinate system, and the coordinates of the designated first point Pt in a numerical control data coordinate system are entered by a keyboard or the like to set the origin of the numerical control data coordinate system. The invention provides a method and apparatus for effecting the foregoing setting of the coordinate system origin. The origin of the numerical control data coordinate system can be easily established, and can be set and entered even when the origin is located outside the read-out area TRA of the tablet.

**Claims**

1. A method of preparing an NC tape for a numerically controlled machine tool, wherein information concerning a figure on a drawing (DR) and required for preparing the NC tape is entered when the drawing (DR) is laid on the read-out area of an input plane, the figure being entered by designating a plurality of points on the drawing (DR) with a coordinate designating device (13c), the method being characterized in that:

the origin (Rm) of the coordinate system of the drawing (DR) is outside the read-out area of the input plane, which is a tablet (TRA), and is set and entered by a method comprising the steps of

designating a first point (Pt) on the drawing with the coordinate designating device (13c) to enter the coordinates $(x_t, y_t)$ of said first point (Pt) with respect to the tablet coordinate system;

entering the coordinates $(X_t, Y_t)$ of said first point (Pt) in a numerical control data coordinate system through an input device (11a), the coordinate axes of the two coordinate systems being parallel; and

setting the origin (Rm) of the numerical control data coordinate system by subtracting the coordinates $(x_t, y_t)$ from the coordinates $(X_t, Y_t)$;

the method further comprising designating an arbitrary second point (Q) on the drawing thereby to enter the coordinates $(x_q, y_q)$ of said second point (Q) in the tablet coordinate system, and setting the coordinates $(x_m, y_m)$ of said second point (Q) in the numerical control data coordinate system by performing the following arithmetic operations:

$$x_m = x_q + (X_t - x_t)$$

$$y_m = y_q + (Y_t - y_t).$$

2. An apparatus for preparing an NC tape for a numerically controlled machine tool, wherein information concerning a figure on a drawing (DR) and required for preparing the NC tape can be entered, the apparatus comprising:

an input plane having a read-out area for placing the drawing (DR) thereon; and

coordinate designating means (13c) for designating a plurality of points on the figure to enter coordinates thereof;

the apparatus being characterised in that the input plane is a tablet (DRA) for receiving a drawing (DR) with its origin ($R_m$) outside said read-out area, and the apparatus comprises:

a first register (101a) for storing the coordinates ($x_t$, $Y_t$) of a first point (Pt) on the figure in a tablet coordinate system;

a second register (101b) for storing the coordinates ($X_t$, $Y_t$) of said first point in a numerical control data coordinate system, and

a third register (101c) for storing the coordinates ($x_q$, $y_q$) of a second point (Q) in the tablet coordinate system, which coordinates are entered by means of said tablet; and

coordinate transformation means (103) for performing the following arithmetic operations to obtain coordinates ($x_m$, $y_m$) of said second point (Q) in the numerical control data coordinate system:

$$x_m = x_q + (X_t - x_t)$$

$$y_m = y_q + (Y_t - y_t)$$

3. The apparatus according to claim 2, further comprising means (104) for creating numerical control data from the coordinates ($x_m$, $y_m$) obtained from said coordinate transformation means (103).

4. The apparatus according to claim 3, further comprising a data memory (105) for storing the numerical control data created by said last-mentioned means (104).

**Patentansprüche**

1. Verfahren zum Herstellen eines Steuerstreifens für eine numerisch gesteuerte Werkzeugmaschine, bei dem Information, die eine Figur in einer Zeichnung (DR) betrifft und zum Herstellen des Steuerstreifens benötigt wird, eingelesen wird, wenn die Zeichnung (DR) auf die Auslesefläche einer Eingabeebene gelegt ist, wobei die Figur durch Bezeichnen einer Vielzahl von Punkten in der Zeichnung (DR) mit einer Koordinaten-Bezeichnungseinrichtung (13c) eingelesen wird, dadurch gekennzeichnet,

— daß der Ursprung (Rm) des Koordinatensystems der Zeichnung (DR) außerhalb der Auslesefläche der Eingabeebene, die eine Tafel (TRA) ist, leigt und durch ein Verfahren gesetzt und eingelesen wird, das Schritte zum

Bezeichnen eines ersten Punktes (Pt) in der Zeichnung mit der Koordinaten-Bezeichnungseinrichtung (13c) zum Einlesen der Koordinaten ($x_t$, $y_t$) des ersten Punktes (Pt) in bezug auf das Tafel-Koordinatensystem,

Einlesen der Koordinaten ($X_t$, $Y_t$) des ersten Punktes (Pt) in einem numerischen Steuerdaten-Koordinatensystem durch eine Eingabeeinrichtung (11a), wobei die Koordinatenachsen der beiden Koordinatensysteme parallel zueinander liegen, und

Setzen des Ursprungs (Rm) des numerischen Steuerdate-Koordinatensystems durch Subtrahieren der Koordinaten ($x_t$, $y_t$) von den Koordinaten ($X_t$, $Y_t$) enthält, und

— daß das Verfahren desweiteren das Bezeichnen eines beliebigen zweiten Punktes (Q) in der Zeichnung, um dadurch die Koordinaten ($x_q$, $y_q$) des zweiten Punktes (Q) in dem Tafel-Koordinatensystem einzulesen, und das Setzen der Koordinaten ($x_m$, $y_m$) des zweiten Punktes (Q) in dem numerischen Steuerdaten-Koordinatensystem durch Ausführen der arithmetischen Operationen

$$x_m = x_q + (X_t - x_t)$$

$$y_m = y_q + (Y_t - y_t)$$

enthält.

2. Vorrichtung zum Herstellen eines Steuerstreifens für eine numerisch gesteuerte Werkzeugmaschine, bei der Information, die eine Figur in einer Zeichnung (DR) betrifft und zum Herstellen des Steuerstreifens benötigt wird, eingelesen werden kann, mit

einer Eingabeebene, die eine Auslesefläche zum Plazieren einer Zeichnung (DR) darauf hat, und

einem Koordinaten-Bezeichnungsmittel (13c) zum Bezeichnen einer Vielzahl von Punkten in der Figur zum Einlesen von Koordinaten derselben, dadurch gekennzeichnet,

— daß die Eingabeebene eine Tafel (TRA) zum Aufnehmen einer Zeichnung (DR) ist, wobei deren Ursprung (Rm) außer halb der Auslesefläche liegt, und

— daß die Vorrichtung

ein erstes Register (101a) zum Speichern der Koordinaten ($X_t$, $Y_t$) eines ersten Punktes (Pt) in der Figur in einem Tafel-Koordinatensystem,

ein zweites Register (101b) zum Speichern der Koordinaten ($X_t$, $Y_t$) des ersten Punktes in einem numerischen Steuerdaten-Koordinatensystem und

ein drittes Register (101c) zum Speichern der Koordinaten $(x_q, y_q)$ eines zweiten Punktes (Q) in dem Tafel-Koordinatensystem, welche Koordinaten mittels der Tafel eingelesen werden, sowie

ein Koordinaten-Transformationsmittel (103) zum Ausführen der arithmetischen Operationen

$$x_m = x_q + (X_t - x_t)$$

$$y_m = y_q + (Y_t - y_t),$$

um Koordinaten $(x_m, y_m)$ des zweiten Punktes (Q) in dem numerischen Steuerdatenkoordinatensystem zu gewinnen, enthält.

3. Vorrichtung nach Anspruch 2, die desweiteren ein Mittel (104) zum Erzeugen von numerischen Steuerdaten aus den Koordinaten $(x_m, y_m)$, die aus dem Koordinaten-Transformationsmittel (103) gewonnen sind, enthält.

4. Vorrichtung nach Anspruch 3, die desweiteren einen Datenspeicher (105) zum Speichern der numerischen Steuerdaten enthält, die durch das zuletzt genannte Mittel (104) erzeugt werden.

**Revendications**

1. Méthode de préparation d'une bande NC pour une machine-outil à commande numérique, dans laquelle des informations concernant une figure d'un plan (DR) nécessaires à la préparation de la bande NC sont entrées lorsque le plan (DR) est posé sur la zone de lecture d'un plan d'entrée, la figure étant entrée en désignant une pluralité de points du plan (DR) avec un dispositif de désignation des coordonnées (13c), la méthode étant caractérisée en ce que:

l'origine (Rm) du système de coordonnées du plan (DR) est à l'extérieur de la surface de lecture du plan d'entrée, qui est une tablette (TRA), et elle est placée et entrée par une méthode comprenant les opérations de:

désignation d'un premier point (Pt) du plan avec le dispositif de désignation des coordonnées (13c) pour entrer les coordonnées $(x_t, y_t)$ dudit premier point (Pt) par rapport au système des coordonnées de la tablette;

entrée des coordonnées $(X_t, Y_t)$ dudit premier point (Pt) dans un système de coordonnées de données de commande numérique par l'intermédiaire d'un dispositif d'entrée (11a), les axes de coordonnées des deux systèmes de coordonnées étant parallèles; et

placement de l'origine (Rm) du système de coordonnées des données de commande numérique en retranchant les coordonnées $(x_t, y_t)$ des coordonnées $(X_t, Y_t)$;

la méthode comprenant encore la désignation d'un second point arbitraire (Q) sur le plan pour entrer les coordonnées $(x_q, y_q)$ dudit second point (Q) dans le système des coordonnées de la tablette et le placement des coordonnées $(x_m, y_m)$

dudit second point (Q) dans le système des coordonnées des données de commande numérique en effectuant les opérations arithmétiques suivantes:

$$x_m = x_q + (X_t - x_t)$$

$$y_m = y_q + (Y_t - y_t)$$

2. Appareil pour le préparation d'une bande de commande numérique pour une machine-outil à commande numérique; dans lequel les informations concernant une figure d'un plan (DR) nécessaires à la préparation de la bande NC peuvent être entrées, l'appareil comprenant:

un plan d'entrée ayant une zone de lecture destinée à recevoir le plan (DR); et

des moyens de désignation des coordonnées (13c) pour désigner une pluralité de points de la figure et entrer les coordonnées de ces points;

l'appareil étant caractérisé en ce que le plan d'entrée est une tablette (DRA) pour recevoir un plan (DR) avec son origine $(R_m)$ à l'extérieur de ladite zone de lecture et en ce que l'appareil comprend:

un premier registre (101a) pour stocker les coordonnées $(x_t, y_t)$ d'un premier point (Pt) de la figure dans un système de coordonnées de tablette;

un second registre (101b) pour stocker les coordonnées $(X_t, Y_t)$ dudit premier point dans un système de coordonnées de données de commande numérique, et

un troisième registre (101c) pour stocker les coordonnées $(x_q, y_q)$ d'un second point (Q) dans le système des coordonnées de la tablette, lesquelles coordonnées sont entrées au moyen de ladite tablette; et

des moyens de transformation des coordonnées (103) destinés à exécuter les opérations arithmétiques suivantes afin d'obtenir les coordonnées $(x_m, y_m)$ dudit second point (Q) dans le système des coordonnées des données de commande numérique:

$$x_m = x_q + (X_t - x_t)$$

$$y_m = y_q + (Y_t - y_t)$$

3. Appareil selon la revendication 2, comprenant encore des moyens (104) pour créer des données de commande numirique à partir des coordonnées $(x_m, y_m)$ obtenues à partir desdits moyens de transformation des coordonnées (103).

4. Appareil selon la revendication 3, comprenant encore une mémoire des données (105) pour stocker les données de commande numérique créées par lesdits derniers moyens mentionnés (104).

# Fig. 1

# Fig. 2

# Fig. 3

# Fig. 4

# Fig. 5